# EUROPÄISCHE PATENTSCHRIFT

(11) **EP 3 529 006 B1**
(45) Veröffentlichungstag und Bekanntmachung des Hinweises auf die Patenterteilung: **11.01.2023**
(21) Anmeldenummer: 17781134.6
(22) Anmeldetag: 12.10.2017
(51) Int. Cl.: B25D 17/26, B25D 16/00, B23Q 11/00, B23Q 17/20

(54) **STEUERUNGSVERFAHREN UND BORLOCHSPÜLMODUL**
CONTROL METHOD AND BOREHOLE FLUSHING MODULE
PROCÉDÉ DE COMMANDE ET MODULE DE RINÇAGE DE TROU DE FORAGE

(30) Priorität: 20.10.2016 EP 16194715
(43) Veröffentlichungstag der Anmeldung: 28.08.2019
(73) Patentinhaber: Hilti Aktiengesellschaft, 9494 Schaan (LI)
(72) Erfinder: HARTMANN, Markus, 87665 Mauerstetten (DE); BOHN, Klaus-Peter, 9486 Schaanwald (LI); PLÜMACHER, Bastian, 86830 Schwabmünchen (DE); BRUNNER, Michael, 86862 Lamerdingen (DE); WESSELER GEB. KAPS, Helene, 81245 München (DE); PETERS, Carsten, 9468 Sax (CH)
(74) Vertreter: Hilti Aktiengesellschaft Corporate Intellectual Property
(86) Internationale Anmeldenummer: PCT/EP2017/076022
(87) Internationale Veröffentlichungsnummer: WO 2018/073092

(56) Entgegenhaltungen:
- EP-A1- 2 067 553
- DE-B- 1 192 132
- DE-B3-102004 035 875

## Beschreibung

### GEBIET DER ERFINDUNG

Die vorliegende Erfindung betrifft ein Steuerungsverfahren für ein bohrmeißelndes Werkzeug, ein Bohrlochspülmodul für ein bohrmeißelndes Werkzeug gemäß dem Oberbegriff von Anspruch 8, sowie eine Handwerkzeugmaschine mit einem Bohrlochspülmodul. Ein solches Verfahren, ein solches Bohrlochspülmodul und eine solche Handwerkzeugmaschine sind bekannt aus EP 2 067 553 A1 bekannt.

US 9,132,572 beschreibt einen Bohrhammer mit einem Bohrlochspülmodul. Der Bohrhammer hat ein pneumatisches Schlagwerk, das periodisch Schläge auf einen Bohrer ausübt. Der Bohrer wird ferner um seine Längsachse gedreht. Der Bohrhammer wird insbesondere eingesetzt um Bohrlöcher in mineralische Baumaterialien, wie z.B. Beton, zu bohren. Die verwendeten Bohrer sind daher für die Bearbeitung von mineralischen Bauwerkstoffen optimiert. Das Bohrlochspülmodul entfernt das anfallende Bohrmehl unmittelbar an dem Bohrloch, um die Arbeitsumgebung für den Anwender staubarm zu halten. Typischerweise sind Betonstrukturen mit Armierungseisen versehen, welche der meißelnde Bohrer nur vergleichsweise langsam durchtrennt.

US 6,640,205 beschreibt einen Bohrhammer, der während des Abbaus eines Untergrunds rücklaufende Stoßwellen in dem Bohrer untersucht. Basierend auf den Stoßwellen wird eine Materialzusammensetzung des Untergrunds ermittelt.

### OFFENBARUNG DER ERFINDUNG

Das erfindungsgemäße Steuerungsverfahren eines Bohrlochspülmoduls für ein meißelndes Werkzeug gemäß dem Anspruch 1 beinhaltet die Schritte: Bereitstellen von feinkörnigen Partikeln in einem Dispenser; Ermitteln eines Materials an einer von dem Werkzeug bearbeiteten Stelle durch einen Materialdetektor; und Einbringen feinkörniger Partikel an die von dem Werkzeug bearbeitete Stelle des Untergrunds, wenn der Materialdetektor ein eisenhaltiges Material ermittelt. Die feinkörnigen Partikel, beispielsweise mineralisches Bohrmehl, begünstigt den meißelnden Abbau von eisenhaltigen Materialien. Die feinkörnigen Partikel sind vorzugsweise mineralisch.

Erfindungsgemäß wird ein Luftstrom von der durch das Werkzeug bearbeiteten Stelle mittels eines Lüfters des Bohrlochspülmoduls angesaugt, wenn der Materialdetektor ein hauptsächlich mineralisches Material ermittelt. Falls oder solange mineralisches Material abgebaut wird, wird dieses aus dem Bohrloch entfernt. Das mineralische Bohrgut oder Bohrmehl behindert den Fortschritt beim Abbau.

Eine Ausgestaltung sieht vor, dass wenn der Materialdetektor ein eisenhaltiges Material ermittelt, die feinkörnigen Partikel unter Beimengen in einen von einem Gebläse des Bohrlochspülmoduls erzeugten Luftstroms an die bearbeitete Stelle eingebracht werden. Das Einbringen der Partikel kann durch einen Luftstrom erfolgen oder unterstützt werden.

Eine Ausgestaltung sieht vor, dass ein Dosierventil des Dispensers geschlossen ist, wenn der Materialdetektor ein mineralisches Material ermittelt, und das Dosierventil geöffnet ist, wenn der Materialdetektor ein eisenhaltiges Material ermittelt.

Eine Ausgestaltung sieht vor, dass der Materialdetektor Vibrationen des Bohrlochspülmoduls oder Vibrationen einer Handwerkzeugmaschine, in welcher das meißelnde Werkzeug eingesetzt ist, durch einen Vibrationssensor erfasst und eine Auswertungseinheit basierend auf den Vibrationen das Material ermittelt. Beim Bearbeiten von Armierungseisen steigen die Vibrationen der Handwerkzeugmaschine stark an. Die Vibrationen können an der Handwerkzeugmaschine, dem Bohrer oder an dem angeschlossenen Bohrlochspülmodul erfasst werden. Die Vibrationen erlauben eine ausreichend zuverlässige Ferndiagnose des Materials, an welchem der Bohrkopf zum Bearbeiten anliegt und aufschlägt. Eine Vibration oberhalb eines Schwellwerts kann einem eisenhaltigen Material und eine Vibration unterhalb des Schwellwerts einem hauptsächlich mineralischen Material zugeordnet werden.

Das erfindungsgemäße Bohrlochspülmodul für ein meißelndes Werkzeug gemäß dem Anspruch 8 hat ein Gebläse zum Erzeugen eines ausblasenden Luftstroms, einen steuerbaren Dispenser zum Ausgeben feinkörniger Partikel in den von dem Gebläse erzeugten Luftstrom, einen Materialdetektor zum Ermitteln des von dem Werkzeug bearbeiteten Materials und eine Steuerung. Die Steuerung ist mit dem Materialdetektor und dem Dispenser gekoppelt. Ansprechend auf das von dem Materialdetektor ermittelte Material, schließt die Steuerung den Dispenser, wenn der Materialdetektor ein mineralisches Material ermittelt. Die Steuerung schaltet den Dispenser die feinkörnigen Partikel ausgebend, wenn der Materialdetektor ein eisenhaltiges Material ermittelt.

Eine Ausgestaltung sieht vor, dass der Materialdetektor einen Vibrationssensor zum Erfassen von Vibrationen und eine Auswertungseinheit zum Zuordnen von Vibrationen oberhalb eines Schwellwerts zu einem eisenhaltigen Material und von Vibrationen unterhalb des Schwellwerts zu einem mineralischen Material beinhaltet.

Eine Ausgestaltung sieht einen Staubsammelbehälter und einen Staubfilter und wahlweise einen Lüfter zum Erzeugen eines ansaugenden Luftstroms oder eine Gebläse vor. Das Gebläse ist zwischen dem ausblasenden Luftstrom und dem ansaugenden Luftstrom schaltbar.

Die erfindungsgemäße Handwerkzeugmaschine mit dem Bohrlochspülmodul gemäß dem Anspruch 11 hat einen Elektromotor und ein von dem Elektromotor angetriebenes Schlagwerk.

### KURZE BESCHREIBUNG DER FIGUREN

Die nachfolgende Beschreibung erläutert die Erfindung anhand von exemplarischen Ausführungsformen und Figuren. In den Figuren zeigen:
Fig. 1 einen Bohrhammer mit einem Bohrlochspülmodul
Fig. 2 ein Steuerungsverfahren für das Bohrlochspülmodul
Fig. 3 einen Bohrhammer mit einem Bohrlochspülmodul
Fig. 4 ein Bohrlochspülmodul

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

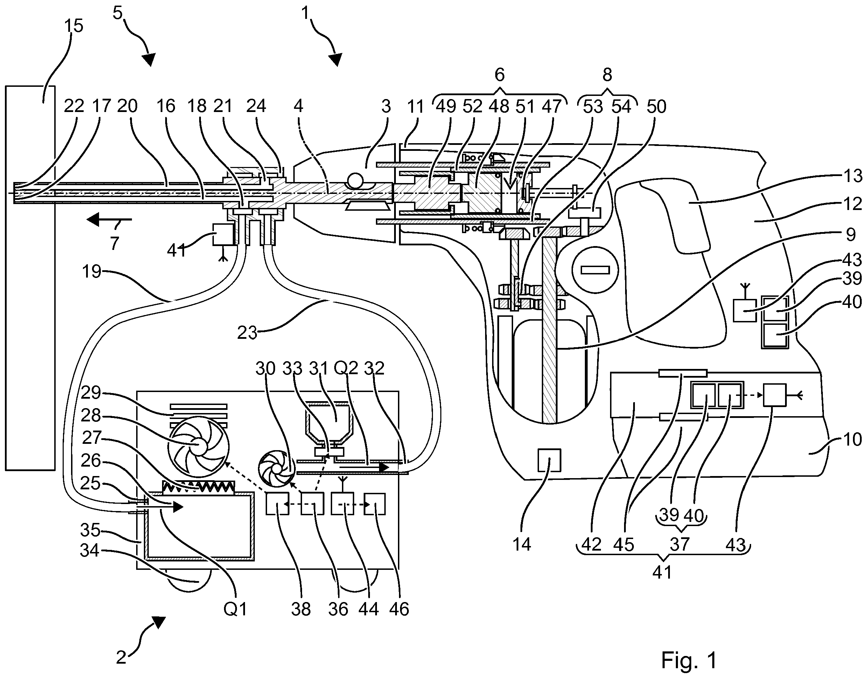

Fig. 1 zeigt schematisch einen Bohrhammer **1** mit einem Bohrlochspülmodul **2** zum Absaugen von anfallendem Bohrgut. Der Bohrhammer **1** ist ein Beispiel für eine schlagende handgehaltene Werkzeugmaschine.

Der Bohrhammer **1** hat einen Werkzeughalter **3,** in welchen koaxial zu einer Arbeitsachse **4** ein Bohrer, Meißel oder anderes schlagendes Werkzeug **5** eingesetzt und verriegelt werden kann. Der Bohrhammer **1** hat ein pneumatisches Schlagwerk **6,** welches periodisch Schläge in einer Schlagrichtung **7** auf der Bohrer **5** ausüben kann. Ein Drehantrieb **8** kann den Werkzeughalter **3** kontinuierlich um die Arbeitsachse **4** drehen. Das pneumatische Schlagwerk **6** und der Drehantrieb sind von einem Elektromotor **9** angetrieben, welcher aus einer Batterie **10** oder einer Netzleitung mit elektrischem Strom gespeist wird.

Das Schlagwerk **6** und der Drehantrieb **8** sind in einem Maschinengehäuse **11** angeordnet. Ein Handgriff **12** ist typischerweise an einer dem Werkzeughalter **3** abgewandten Seite des Maschinengehäuses **11** angeordnet. Der Anwender kann den Bohrhammer **1** mittels des Handgriffs **12** im Betrieb halten und führen. Ein zusätzlicher Hilfsgriff kann nahe dem Werkzeughalter **3** befestigt werden. An oder in der Nähe des Handgriffs **12** ist ein Betriebstaster **13** angeordnet, welchen der Anwender vorzugsweise mit der haltenden Hand betätigen kann. Der Elektromotor **9** wird durch Betätigen des Betriebstasters **13** eingeschaltet. Typischerweise dreht sich der Elektromotor **9** solange, wie der Betriebstaster **13** gedrückt gehalten ist. Der Bohrhammer **1** hat typischerweise eine Leistungsregelung **14,** welche die Schlagleistung des Schlagwerks **6** konstant hält. Die Regelung basiert beispielsweise auf einer Drehzahlregelung des Elektromotors **9.**

Das Bohrlochspülmodul 2 wird ohne darauf beschränkt zu sein zunächst im Zusammenspiel für einen speziellen Bohrer **5** beschrieben, um die Funktionsweise des Bohrlochspülmoduls **2** zu erläutern. Der Bohrer **5** hat einen Bohrkopf, um ein Bohrloch in einem Untergrund **15** zu bohren. Der Bohrkopf ist mit Schneiden für einen meißelnden Betrieb versehen. Der Bohrer **5** hat anstelle einer herkömmlichen Wendel zum Abtransport von Bohrgut einen in dem Schaft verlaufenden Absaugkanal **16** zum Absaugen des Bohrguts. Der Absaugkanal **16** hat eine Ansaugöffnung **17** an dem Bohrkopf des Bohrers **5** und eine Absaugöffnung **18** nahe einem Einsteckende des Bohrers **5.** Die Absaugöffnung **18** ist über einen (Absaug-) Schlauch **19** mit dem Bohrlochspülmodul **2** verbunden. Der Bohrer **5** hat einen Einspeisekanal **20,** welcher parallel zu dem Absaugkanal **16** in dem Schaft des Bohrers **5** angeordnet ist. Der Einspeisekanal **20** verläuft von einer Einspeiseöffnung **21** nahe der Absaugöffnung **18** bis zu einer Ausgabeöffnung **22** nahe dem Bohrkopf oder der Ansaugöffnung **17.** Die Einspeiseöffnung **21** ist mittels eines (Einspeise-) Schlauchs **23** mit dem Bohrlochspülmodul **2** verbunden. Der Absaugschlauch **19** und der Einspeiseschlauch **23** können mechanisch miteinander verbunden sein, weisen jedoch zwei getrennte Strömungskanäle zwecks dem Absaugen und Einspeisen auf. Da sich der Bohrer **5** im Betrieb um seine Längsachse dreht sind die Schläuche **19, 23** über eine Muffe **24** an den Bohrer **5** angeschlossen. Die Muffe **24** ist drehbar auf dem Bohrer **5** gelagert. Die Muffe **24** hat zwei getrennte ringförmige Kammern. Jeweils eine der Kammern umgibt die Absaugöffnung **18** bzw. die Einspeiseöffnung **21.** Anstelle einer mechanisch zusammenhängenden Muffe **24** können die Absaugöffnung **18** und die Einspeiseöffnung **21** auch über zwei getrennte Muffen angeschlossen werden.

Das Bohrlochspülmodul **2** hat in einer Strömungsrichtung zum Absaugen aufeinanderfolgend einen Ansauganschluss **25,** einen Staubsammelbehälter **26,** einen Staubfilter **27** und einen Lüfter **28.** Der Ansauganschluss **25** ist mit dem Bohrer **5** mittels des flexiblen Absaugschlauchs **19** verbunden. Der Lüfter **28** erzeugt einen Luftstrom **Q1,** der an der Ansaugöffnung **17** des Bohrers **5** einströmt und Bohrgut unmittelbar in dem Bohrloch absaugt. Der staubbeladene Luftstrom **Q1** fließt durch den Absaugkanal **16** und die Absaugöffnung **18** des Bohrers **5** in die Staubsammelbehälter **26** des Bohrlochspülmoduls **2.** Der Staub wird durch den Staubfilter **27** abgeschieden und bleibt in dem Staubsammelbehälter **26** zurück. Die gereinigte Luft tritt über Ausblasöffungen **29** des Bohrlochspülmoduls **2** aus.

Das Bohrlochspülmodul **2** hat in einer Strömungsrichtung zum Einspeisen aufeinanderfolgend ein Gebläse **30,** einen Dispenser **31** und eine Einspeiseanschluss **32.** Der Einspeiseanschluss **32** ist über den Einspeiseschlauch **23** mit dem Bohrer **5** verbunden. Der Dispenser **31** ist mit feinkörnigen Partikeln gefüllt. Die feinkörnigen Partikel können beispielsweise das in dem Staubsammelbehälter **26** gesammelte Bohrgut sein. Die Partikel sind vorzugsweise mineralisch. Die mittlere Größe liegt im Bereich zwischen 10 µm und 200 µm. Alternativ oder zusätzlich können die feinkörnigen Partikel aus Molibdänsulfid (MoS2) sein. Das Gebläse **30** erzeugt einen Luftstrom **Q2,** welcher feinkörnigen Partikel von dem Dispenser **31** in den Bohrer **5** transportiert. Die feinkörnigen Partikel werden an der Ausgabeöffnung **22** nahe dem Bohrkopf, d.h. in dem Bohrloch, ausgegeben. Der Dispenser **31** kann mit einem schaltbaren Dosierventil **33** zum Dosieren des von dem Dispenser **31** ausgegebenen Materials versehen sein.

Das Bohrlochspülmodul **2** ist beispielsweise eine nicht-handgehaltene Einheit, welche im Betrieb auf dem Boden steht. Das beispielhafte Bohrlochspülmodul **2** hat Räder **34** an seinem Gehäuse **35.** Der Ansauganschluss **25** und der Einspeiseanschluss **32** sind an der Außenseite des Gehäuses **35** zugänglich oder an der Außenseite angeordnet. Der Staubsammelbehälter **26,** der Staubfilter **27,** der Lüfter **28,** das Gebläse **30,** und der Dispenser **31** sind in dem Gehäuse **35** angeordnet. In einer Ausführung kann die Funktion des Gebläses **30** durch den Lüfter **28** übernommen werden. Das Bohrlochspülmodul **2** hat demnach statt eines Lüfters **28** und eines Gebläses **30** nur einen Lüfter **28.**

Eine Steuerung **36** kontrolliert den Lüfter **28,** das Gebläse **30** und den Dispenser **31.** Die Steuerung **36** nimmt Stellsignale eines Materialdetektors **37** entgegen und schaltet ansprechend auf diese Stellsignale den Lüfter **28,** das Gebläse **30** und den Dispenser **31.**

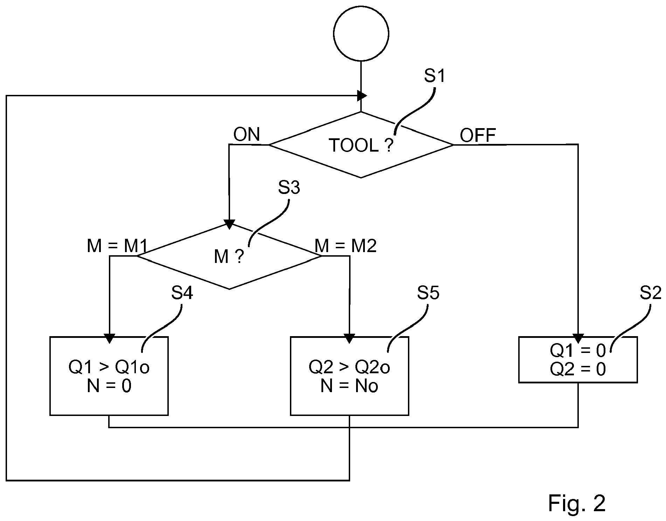

Ein beispielhaftes Steuerungsverfahren ist in Fig. 2 dargestellt. Der Materialdetektor **37** prüft fortlaufend oder periodisch, welches Material **M** der Bohrer **5** bearbeitet Schritt **S3.** Das Bohrlochspülmodul **2** führt einen (Standard-) Betrieb Schritt **S4** aus, wenn das Material ein mineralisches Material **M1** ist, z.B. Beton, Ziegel, Naturstein. Der Lüfter **28** fördert einen ausreichenden, ansaugenden Luftstrom **Q1** zum Abtransport von Bohrgut. Eine Drehzahl, geregelt oder ungeregelt, des Lüfters **28** ist gleich oder größer einem Nennwert. Der ansaugende Luftstrom **Q1** ist entsprechend größer als ein Nennwert **Q1o.** Der Nennwert **Q1o** liegt beispielsweise im Bereich zwischen 4 l/s (Liter pro Sekunde) bis 10 l/s. Der Dispenser **31** ist während des Standardbetriebs geschlossen. Eine von dem Dispenser **31** abgegebene Materialmenge **N** der feinkörnigen Partikel ist gleich Null. Das Gebläse **30** kann während des Standardbetriebs abgeschaltet sein. Der ausblasende Luftstrom **Q2** kann gleich Null sein. Das Gebläse **30** kann jedoch auch zur Unterstützung des Absaugens von Bohrmehl saubere Luft in das Bohrloch ausblasen. Der ausblasende Luftstrom **Q2** ist entsprechend größer als Null. Das Bohrlochspülmodul **2** führt einen (Spül-) Betrieb aus, wenn und solange das bearbeitete Material **M2** eisenhaltig ist, z.B. wenn der Bohrer **5** ein Armierungseisen bearbeitet. Der Dispenser **31** gibt nun die feinkörnigen Partikel aus. Die Materialmenge **N** ist größer Null. Die ausgegebene Materialmenge **No** kann beispielsweise auf die Größe des Bohrers **5** abgestimmt sein. Das Gebläse **30** ist aktiv, um die feinkörnigen Partikel in den Bohrer **5** einzuspeisen. Der ausblasende Luftstrom **Q2** wird auf einen Nennwert **Q2o** größer Null eingestellt. Der Lüfter **28** kann deaktiviert werden, d.h. der ansaugende Luftstrom **Q1** auf Null reduziert werden. Es erweist sich jedoch als vorteilhaft den ansaugenden Luftstrom **Q1** nur gegenüber dem Standardbetrieb zu reduzieren. Das zu dem Ausblasen zusätzliche Absaugen begünstigt einen schnellen Transport der feinkörnigen Partikel in das Bohrloch. Der ansaugende Luftstrom **Q2** kann verzögert zu dem Erkennen des eisenhaltigen Materials **M2** abgeschaltet werden. Die Verzögerung entspricht der Dauer, welche das Gebläse **30** benötigt um die feinkörnigen Partikel in das Bohrloch zu befördern. Das Bohrlochspülmodul **2** wechselt in den Standardbetrieb zurück, wenn der Bohrer **5** mineralisches Material bearbeitet.

Der Lüfter **28** kann ungeregelt auf die Stellsignale der Steuerung **36** ansprechen. Die Drehzahl des Lüfters **28** bzw. der Luftstrom in dem Bohrlochspülmodul **2** sind entsprechend durch die Lastgrenze des Lüfters **28** oder der Stromversorgung vorgegeben. Alternativ kann eine Lüftersteuerung **38** den Luftstrom **Q1,** die Drehzahl des Lüfters oder einen Druck in dem Bohrlochspülmodul **2** auf eine Soll-Größe hin ausregeln, beispielsweise indem die Leistungsaufnahme des Lüfters **28** angepasst wird. Vorzugsweise wird ein konstanter Luftstrom **Q1** an dem Ansauganschluss **25** gewährleistet. Beispielsweise wird die Drehzahl oder die Leistungsaufnahme des Lüfters **28** erhöht, wenn eine erhöhte Staubmenge in der angesaugten Luft festgestellt wird. Beispielsweise kann die Drehzahl auch in Abhängigkeit des Füllstands in dem Staubsammelbehälter **26,** dem Druck in der Ansaugdüse **17,** dem Druck in der Umgebung des Lüfters **28,** etc. angepasst werden.

Das Prüfen des Materials **M** erfolgt mit einem Materialdetektor **37.** Der Materialdetektor **37** kann die in dem Werkzeug **5** rücklaufende Stoßwelle auswerten, wie z.B. in US 6,640,205 beschrieben. Ein anderer beispielhafter Materialdetektor **37** beinhaltet einen Vibrationssensor **39** zum Erfassen von Vibrationen und eine Auswertungseinheit **40.** Der Bohrer **5** erfährt beim schlagenden Bearbeiten von mineralischem Material und eisenhaltigem Material unterschiedliche rückwirkende Kräfte. Die Vibrationen in dem Bohrhammer **1** sind bei einem eisenhaltigen Material deutlich höher als bei Gestein oder sonstigen mineralischen Materialien **M1.** Die Auswertungseinheit **40** vergleicht die von dem Vibrationssensor **39** erfassten Vibrationen beispielsweise mit einem Schwellwert. Ein Unterschreiten des Schwellwerts wird einem Bohren von mineralischem Material **M1** zugeordnet und ein Überschreiten des Schwellwerts wird einem Bohren von eisenhaltigem Material **M2** zugeordnet. Der Schwellwert ist durch Versuchsreihen ermittelbar. Der Schwellwert kann in der Auswertungseinheit **40** hinterlegt sein. Anstelle des Vergleichs mit einem einzelnen Schwellwert kann anhand eines komplexeren Fingerabdrucks das Bohren von Gestein von dem Bohren von eisenhaltigem Material diskriminiert werden. Die Vibrationen können in ein oder mehreren Frequenzbändern ermittelt und mit jeweiligen Schwellwerten verglichen werden. Ein Frequenzband hat beispielsweise die Schlagzahl als Zentralfrequenz und beispielsweise eine Bandbreite von maximal der Hälfte der Schlagzahl.

Der Vibrationssensor **39** hat beispielsweise einen freischwingenden Arm, auf dem ein piezoelektrischer Polymerfilm aufgebracht ist. Der Arm erzeugt angeregt durch die Vibrationen ein elektrisches Signal, welches der Vibrationssensor **39** auswertet. Der Vibrationssensor **39** kann ein Beschleunigungssensor sein, welche als Maß für Vibrationen Beschleunigungswerte ausgibt. Der Vibrationssensor **39** kann ebenso ein Mikrophon sein, vorzugsweise zum Erfassen von Geräuschen im Infraschall.

Der Materialdetektor **37** kann räumlich getrennt von dem Bohrlochspülmodul **2** angeordnet sein. Der Materialdetektor **37** hat als separates Detektormodul **41** ein von dem Gehäuse **35** getrenntes Gehäuse **42.** Das Gehäuse **42** ist starr mit dem Bohrer **5** oder mit dem Bohrhammer **1** verbunden. Die Vibrationen des Bohrers **5** bzw. des Bohrhammers **1** übertragen sich auf den Materialdetektor **37.** Der Materialdetektor **37** ist mit einem Sender **43** verbunden, welche das von dem Materialdetektor **37** ermittelte Material **M** an das Bohrlochspülmodul **2** übermittelt. Das Bohrlochspülmodul **2** ist mit einem entsprechenden Empfänger **44** in dem Gehäuse **35** ausgestattet, um die Signale des Senders **43** zu empfangen.

Das Detektormodul **41** hat beispielsweise ein Gehäuse **42** mit zwei elektro-mechanischen Schnittstellen **45.** Eine der Schnittstellen **45** entspricht der Schnittstelle der Batterie **10** und die andere Schnittstelle entspricht der Schnittstelle des Bohrhammers **1.** Der Materialdetektor **37** kann somit zwischen Bohrhammer **1** und Batterie **10** angeordnet werden. Eine interne Umverdrahtung in dem Materialdetektor **37** verbindet die beiden Schnittstellen **45** des Materialdetektors **37,** wodurch die Batterie **10** weiterhin die Handwerkzeugmaschine **1** mit Strom versorgt. Die Batterie **10** versorgt zudem den Materialdetektor **37** mit Strom.

Das Detektormodul **41** kann anstelle an dem Bohrhammer **1** an dem Bohrer **5** zum Beispiel mittels der Muffe **24** befestigt werden. Das Detektormodul **41** enthält den Materialdetektor **37,** den Sender **43** und eine Energieversorgung, z.B. eine Batterie **10.** Das Gehäuse **42** kann lösbar oder dauerhaft mit der Muffe **24** verbunden sein. Das Detektormodul **41** kann alternativ auch an dem Außengehäuse des Bohrhammers 1 befestigt werden, z.B. mit einem Spanngurt. Oder das Detektormodul **41** ist ein integraler Bestandteil des Bohrhammers **1.** Die Auswertungseinheit **40** kann teilweise oder vollständig in dem Bohrlochspülmodul **2** angeordnet sein.

Der Bohrhammer **1** baut das mineralische Material **M1** und das eisenhaltige Material **M2** im Wesentlichen in gleicher Weise ab. Die Schlagleistung des Schlagwerks **6** ist bei erkannten mineralischen Material **M1** und erkannten eisenhaltigen Material **M2** gleich. Gegebenenfalls kann aufgrund der unterschiedlichen Belastungen des Bohrhammers **1** bei den unterschiedlichen Materialien die Schlagleistung bei eisenhaltigen Material M2 etwas abgesenkt werden, z.B. um bis zu 20 % gegenüber der Schlagleistung bei mineralischem Material **M1** abgesenkt werden. In einer Variante kann die Drehzahl des Drehantriebs bei eisenhaltigem Material **M2** geringer als eine Drehzahl bei mineralischen Material **M1** sein.

Das Bohrlochspülmodul **2** wird vorzugsweise automatisch, unmittelbar oder mittelbar durch den Bohrhammer **1** ein- und ausgeschaltet. Das Bohrlochspülmodul **2** ist vorzugsweise inaktiv, wenn der Bohrhammer **1** inaktiv ist (Schritt **S1** TOOL OFF). Der von dem Bohrlochspülmodul **2** geförderte Luftstrom **Q1** ist gleich Null, z.B. weil der Lüfter **28** steht. Das Bohrlochspülmodul **2** ist aktiv, wenn der Bohrhammer **1** aktiv ist (Schritt **S1** TOOL ON).

Das Bohrlochspülmodul **2** kann beispielsweise an die Stromversorgung des Bohrhammers **1** angeschlossen sein oder eine separate Stromversorgung aufweisen. Der Betriebstaster **13** des Bohrhammers **1** verbindet synchron die Stromversorgung für den Elektromotor **9** und den Lüfter **28.** Das Ausschalten kann ebenfalls synchron erfolgen. In einer Alternative wird der Lüfter **28** mit einer Verzögerung von mehreren Sekunden nach dem Elektromotor **9** ausgeschaltet Schritt **S2.**

Der Lüfter **28** kann mittelbar durch den Betriebstaster **13** eingeschaltet und/oder ausgeschaltet werden. Beispielsweise hat das Bohrlochspülmodul **2** einen Sensor **46** zum Erkennen einer Leistungsaufnahme des Bohrhammers **1.** Der Bohrhammer **1** kann ein entsprechendes Signal über den Sender **43** an den Empfänger **44** übermitteln. Ferner kann das Bohrlochspülmodul **2** eine Steckdose für die Versorgung eines netzgebundenen Bohrhammers **1** aufweisen. Der Sensor **46** kann erfassen, ob Bohrhammer **1** an der Steckdose elektrische Leistung aufnimmt. Ein mittelbares Einschalten ist insbesondere von Bohrlochspülmodulen 2 mit einer unabhängigen Stromversorgung vorteilhaft. Das Bohrlochspülmodul **2** kann manuell durch den Anwender in einen Wartezustand versetzt werden, aus dem es durch den Betriebstaster **13** aufgeweckt wird.

Der Vibrationssensor **39** kann für das Einschalten des Bohrlochspülmoduls **2** verwendet werden. Die Auswertungseinheit **40** vergleicht die Vibrationen mit einer Untergrenze. Die Untergrenze ist so gering gewählt, dass diese mit einem ausgeschalten Bohrhammer **1** korreliert. Liegen die Vibrationen unterhalb der Untergrenze, deaktiviert die Auswertungseinheit **40** das Bohrlochspülmodul **2,** z.B. gemäß Schritt **S2.** Überschreiten die erfassten Vibrationen die Untergrenze, interpretiert die Auswertungseinheit **40** dies als eingeschalteten Bohrhammer **1** (Schritt **S1,** TOOL ON). Der Schwellwert zum Unterscheiden zwischen einem Bearbeiten von mineralischen Material **M1** und eisenhaltigen Material **M2** ist deutlich höher als die Untergrenze. Der Schwellwert kann für unterschiedliche Leistungsklassen der Bohrhämmer **1** in Versuchsreihen ermittelt werden. In einer Weiterentwicklung kann der Schwellwert für verschiedene Werkzeuge ermittelt werden. Der Bohrhammer **1** kann beispielsweise ein eingesetztes Werkzeug **3** mittels eines Sensors erkennen und den Schwellwert entsprechend dem Werkzeug **3** festlegen. Eine Weiterentwicklung berücksichtigt den unterschiedlichen Klang beim Meißeln von Beton und Stahl. Eine Variante berücksichtigt für den Vergleich mit dem Schwellwert nur Anteil der Vibrationen innerhalb eines Frequenzbereichs. Beispielsweise in einem Frequenzbereich zwischen 200 Hz und 2 kHz, welcher dem höheren Klang eines Schlags von Metall auf Metall zugeordnet werden kann. Eine andere Variante vergleicht einen niederfrequenten Anteil mit einem hochfrequenten Anteil. Die Auswertungseinheit **26** vergleicht die mittlere Amplitude des niederfrequenten Anteils mit der mittleren Amplitude des hochfrequenten Anteils. Ein relativer Anstieg des hochfrequenten Anteils gegenüber dem niederfrequenten Anteil deutet auf die Bearbeitung von eisenhaltigem Material hin. Die Auswertungseinheit **26** vergleicht den relativen Anteil mit einem geeigneten Schwellwert. Die Auswertungseinheit **26** kann die Signalstärke in den Frequenzbereichen beispielsweise durch eine Fourier Analyse ermitteln oder durch analoge Filter bestimmen.

Das pneumatische Schlagwerk **6** hat längs der Schlagrichtung **7** einen Erreger **47,** einen Schläger **48** und einen Döpper **49.** Der Erreger **47** wird mittels des Elektromotors **9** zu einer periodischen Bewegung längs der Arbeitsachse **4** gezwungen. Der Erreger **47** ist über eine Getriebekomponente **50** zum Umsetzen der Drehbewegung des Elektromotors **9** in einer periodische, translatorische Bewegung entlang der Arbeitsachse **4** angebunden. Eine beispielhafte Getriebekomponente beinhaltet ein Exzenterrad oder eine Taumelscheibe. Eine Periode der translatorischen Bewegung des Erregers **47** ist durch die Drehzahl des Elektromotors **9** und ggf. ein Untersetzungsverhältnis in der Getriebekomponente vorgeben.

Der Schläger **48** koppelt über eine Luftfeder an die Bewegung des Erregers **47** an. Die Luftfeder ist durch eine zwischen dem Erreger **47** und dem Schläger **48** abgeschlossene pneumatische Kammer **51** gebildet. Der Schläger **48** bewegt sich in die Schlagrichtung **7** bis der Schläger **48** auf den Döpper **49** aufschlägt. Der Döpper **49** liegt in der Schlagrichtung **7** an dem Bohrer **5** an und überträgt den Schlag auf der Bohrer **5.** Die Periode der Bewegung des Schlägers ist identisch zu der Periode der Bewegung des Erregers **47.** Der Schläger **48** schlägt somit mit einer Schlagzahl, die gleich dem Inversen der Periode ist. Das Wirkprinzip der Luftfeder setzt enge Grenzen für die Periode bzw. die Schlagzahl, da die Effizienz der pneumatischen Kopplung auf eine im Wesentlichen resonante Anregung angewiesen ist. Bei einer Abweichung von mehr als 20 % von einer optimalen Schlagzahl folgt der Schläger **48** typischerweise nicht mehr der Bewegung des Erregers **47.** Die optimale Schlagzahl ist durch die Masse des Schlägers **48** und die geometrischen Abmessungen der pneumatischen Kammer **51** vorgegeben. Eine optimale Schlagzahl liegt im Bereich zwischen 25 Hz und 100 Hz.

Das beispielhafte Schlagwerk **6** hat einen kolbenförmigen Erreger **47** und einen kolbenförmigen Schläger **48,** die durch ein Führungsrohr **52** längs der Arbeitsachse **4** geführt sind. Der Erreger **47** und der Schläger **48** liegen mit ihren Mantelflächen an der Innenfläche des Führungsrohrs **52** an. Die pneumatische Kammer **51** ist durch den Erreger **47** und den Schläger **48** längs der Arbeitsachse **4** und durch das Führungsrohr **52** in radialer Richtung abgeschlossen. Dichtungsringe in den Mantelflächen von Erreger **47** und Schläger **48** können den luftdichten Abschluss der pneumatischen Kammer **51** verbessern. Der Erreger **47** wird durch den Elektromotor **9** angetrieben. Ein Exzenterrad **50** oder ein anderer Umsetzer setzt die Drehbewegung des Elektromotor **9** in die periodische Translationsbewegung des Erregers **47** um. Das Exzenterrad **50** ist mit dem Elektromotor **9** verbunden.

Der Drehantrieb **8** beinhaltet die Spindel **53,** welche koaxial zu der Arbeitsachse **4** angeordnet ist. Die Spindel **53** ist beispielsweise hohl, und das Schlagwerk **6** ist innerhalb der Spindel angeordnet. Der Werkzeughalter **3** ist auf der Spindel **53** aufgesetzt. Der Werkzeughalter **3** kann über einen Verschlussmechanismus lösbar oder dauerhaft mit der Spindel **53** verbunden sein. Die Spindel **53** ist über ein untersetzendes Getriebe **54** an den Elektromotor **9** angebunden. Die Drehzahl der Spindel **53** ist geringer als die Drehzahl des Elektromotors **9.** Zwischen das untersetzende Getriebe **54** und die Spindel **53** kann eine Rutschkupplung geschaltet sein.

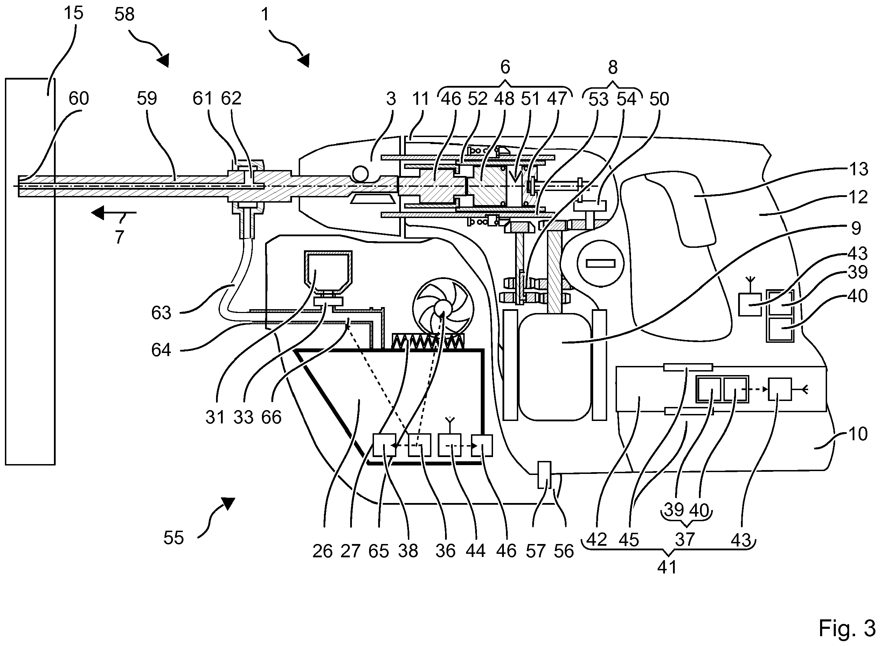

Fig. 3 zeigt ein handgehaltenes Bohrlochspülmodul **55.** Das Bohrlochspülmodul **55** hat ein Gehäuse **56,** welches an dem Maschinengehäuse **11** befestigt werden kann. Beispielsweise hat das Gehäuse **56** einen Verriegelungsmechanismus **57** mit welchem das Bohrlochspülmodul **55** mit dem Bohrhammer **1** lösbar verbunden ist. Der Anwender kann das Bohrlochspülmodul **55** zusammen mit dem Bohrhammer 1 mittels des Handgriffs **12** des Bohrhammers **1** während des Betriebs halten und führen.

Das Bohrlochspülmodul **55** wird in Zusammenhang mit einem beispielhaften Bohrer **58** erläutert. Der Bohrer **5** weist im Gegensatz zu dem vorhergehenden Bohrer **5** nur einen internen Kanal **59** auf. Der interne Kanal **59** dient sowohl zum Absaugen von Bohrgut als auch zum Einspeisen der feinkörnigen Partikel. Der Kanal **59** hat eine kopfseitige Öffnung **60.** Eine Muffe **61** umschließt eine maschinenseitige Öffnung **62** des Kanals **59.** Die Muffe **61** ist über einen Schlauch **63** oder einen starren Kanal mit dem Bohrlochspülmodul **55** verbunden.

Das Bohrlochspülmodul **55** hat in einströmender Richtung einen Anschluss **64,** den Staubsammelbehälter **26,** den Staubfilter **27** und das Gebläse **65.** Das Gebläse **65** kann einen Luftstrom **Q1** ansaugen, welcher staubbeladene Luft von dem Bohrer **58** und damit aus dem Bohrloch absaugt. Der Staub wird an dem Staubfilter **27** abgeschieden. Die Funktionsweise ist analog zu dem Bohrlochspülmodul **2.**

Das Bohrlochspülmodul **55** hat ferner den Dispenser **31.** Der Dispenser **31** ist vorzugsweise in einem Kanal **66** zwischen dem Anschluss **64** und dem Staubsammelbehälter **26** angeordnet. Der Dispenser **31** kann feinkörnige Partikel in den Kanal **66** abgeben. Das Dosierventil **33** wird entsprechend geöffnet und geschlossen. Die Partikel können durch das Gebläse **65** via dem Anschluss **64** aus dem Bohrlochspülmodul **2** ausgeblasen werden, der ausblasende Luftstrom **Q2** ist gegenläufig zu dem ansaugenden Luftstrom **Q1.** Das beispielhafte Gebläse **65** hat eine umkehrbare Förderrichtung. In alternativen Ausgestaltungen können ein separater Lüfter zum Ansaugen und ein Gebläse zum Ausblasen vorgesehen sein.

Ein beispielhaftes Steuerungsverfahren des Bohrlochspülmoduls **55** basiert auf einem fortlaufenden Prüfen, welches Material **M** der Bohrer **58** bearbeitet. Solange der Materialdetektor **37** eine Bearbeitung von mineralischen Material **M1** ermittelt, saugt das Bohrlochspülmodul **55** Luft an. Der Luftstrom **Q1** ist größer Null. Der Dispenser **31** bzw. das Dosierventil **33** ist geschlossen. Sobald der Materialdetektor **37** ein Bearbeiten von eisenhaltigen Material **M2** erfasst, wechselt des Bohrlochspülmodul **55** von dem ansaugenden in den ausblasenden Betrieb. Der Luftstrom **Q1** ist gleich Null, der Luftstrom **Q2** ist größer Null. Das Gebläse **65** wird entsprechend umgeschaltet, beispielsweise wird der versorgende Strom umgepolt. Der Dispenser **31** wird geöffnet, wodurch feinkörnige Partikel in den Kanal **66** fallen und diese durch den Luftstrom **Q2** ausgeblasen und in das Bohrloch transportiert werden. Wenn der Materialdetektor **37** wieder ein Bearbeiten von mineralischen Material **M1** erfasst, wird der Dispenser **31** geschlossen, und der ausblasende Luftstrom **Q2** durch den ansaugenden Luftstrom **Q1** ersetzt.

Das Bohrlochspülmodul **55** kann auch in Kombination mit einem klassischen Bohrer mit Transportwendel eingesetzt werden. Das Bohrlochspülmodul **55** nimmt das Bohrgut von der Transportwendel auf. Die Muffe **61** liegt vorzugsweise an dem Untergrund **15** an, um das Bohrgut möglichst nahe dem Bohrkopf abzusaugen. Die Muffe **61** kann beispielsweise gegenüber dem Gehäuse **56** längs der Arbeitsachse **4** beweglich geführt sein.

Der Materialdetektor **37** erfasst analog den vorhergehend beschriebenen Verfahren, ob der Bohrer ein mineralisches Material **M1** oder ein eisenhaltiges Material **M2** bearbeitet. Solange ein mineralisches Material **M1** erkannt wird, wird der Bohrer drehend angetrieben. Die Drehrichtung ist typischerweise rechtshändig, so dass das Bohrgut von dem Bohrkopf in Richtung zu dem Einsteckende transportiert wird. Das Gebläse **65** saugt das Bohrgut von der Transportwendel ab. Wenn ein eisenhaltiges Material **M2** erkannt wird, wird die Drehrichtung des Bohrers invertiert. Die Drehrichtung ist nun typischerweise linkshändig, so dass das Bohrgut zu dem Bohrkopf transportiert wird. Der Dispenser **31** ist geöffnet. Das Gebläse **65** bläst einen Luftstrom **Q2** aus dem Bohrlochspülmodul **55,** welcher die feinkörnigen Partikel mittransportiert. Die Transportwendel fördert die Partikel in das Bohrloch zu dem Bohrkopf. Sobald der Materialdetektor **37** wieder mineralisches Material **M1** erfasst, wechselt der Bohrlochspülmodul **55** in den ansaugenden Modus.

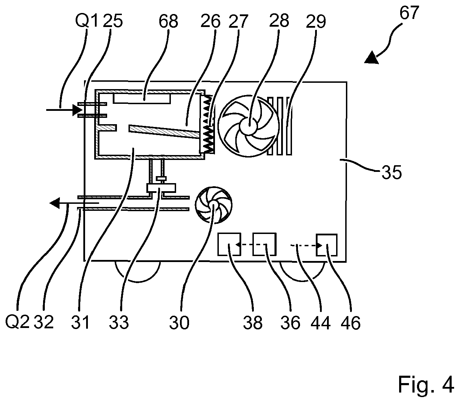

Fig. 4 zeigt eine Ausgestaltung des Bohrlochspülmoduls **67.** Das Bohrlochspülmodul **67** hat einen Staubsammelbehälter **26,** einen Staubfilter **27** und einen Lüfter **28,** wie die zuvor beschriebenen Bohrlochspülmodule. Das Bohrlochspülmodul **67** kann einen Luftstrom **Q1** zum Absaugen von Bohrgut aus dem Bohrloch erzeugen.

Das Bohrlochspülmodul **67** kann ferner einen Luftstrom **Q2** zum Einblasen von feinkörnigen Partikel in das Bohrloch erzeugen. Das Bohrlochspülmodul **67** verwendet das zuvor in den Staubsammelbehälter **26** angesaugte Bohrgut als mineralische, feinkörnige Partikel. Der Staubsammelbehälter **26** dient somit zugleich als Dispenser **31.** Der angesaugte Luftstrom **Q1** wird vorzugsweise von eisenhaltigen Partikeln gereinigt. Das Aufreinigen kann durch einen Magneten **68** erfolgen. Der Magnet **68** ist beispielsweise nahe dem Ansauganschluss **25** angeordnet. Die Eisenspäne können unmittelbar in dem Magnet **68** anhaften. Alternativ kann der Staubsammelbehälter **26** einen von dem Dispenser **31** abgetrennten Bereich zum Sammeln von eisenhaltigem Material verunreinigten Bereich aufweisen. Der Magnet **68** kann das eisenhaltige Material **M2** ablenken. Ferner können das schwerere Metall durch einen Zentrifuge und einen gekrümmte Luftführung abgeschieden werden.

Die dargestellte Ausführungsform nutzt einen Lüfter **28** und ein Gebläse **30** für die beiden Luftströme **Q1, Q2.** In einer Ausgestaltung kann ein Gebläse beide Luftströme **Q1, Q2** erzeugen. Ferner kann das Bohrlochspülmodul **67** gemäß der handgehaltenen Weise aufgebaut werden.

## Patentansprüche

1. Steuerungsverfahren eines Bohrlochspülmoduls (2) für ein bohrmeißelndes Werkzeug (5) mit den Schritten:
Bereitstellen von feinkörnigen Partikeln in einem Dispenser (31),
Ermitteln eines Materials (M) an einer von dem Werkzeug (5) bearbeiteten Stelle durch einen Materialdetektor (37);
Einbringen der feinkörnigen Partikel an die von dem Werkzeug (5) bearbeitete Stelle, wenn der Materialdetektor (37) ein eisenhaltiges Material (M2) ermittelt und
Ansaugen eines Luftstroms (Q1) von der durch das Werkzeug (5) bearbeiteten Stelle mittels eines Lüfters (28) des Bohrlochspülmoduls (2), wenn der Materialdetektor (37) ein hauptsächlich mineralisches Material (M1) ermittelt.

2. Steuerungsverfahren nach Anspruch 1, **dadurch gekennzeichnet, dass** wenn der Materialdetektor (37) ein eisenhaltiges Material (M2) ermittelt, die feinkörnigen Partikel unter Beimengen in einen von einem Gebläse (30) des Bohrlochspülmoduls (2) erzeugten Luftstroms (Q2) an die bearbeitete Stelle eingebracht werden.

3. Steuerungsverfahren nach einem der vorhergehenden Ansprüche, **dadurch gekennzeichnet, dass** aus dem Luftstrom (Q1) feinkörnige Partikel abgeschieden und dem Dispenser (31) zugeführt werden.

4. Steuerungsverfahren nach Anspruch 3, **dadurch gekennzeichnet, dass** eisenhaltige Partikel aus dem Luftstrom (Q1) entfernt werden.

5. Steuerungsverfahren nach einem der vorhergehenden Ansprüche, **dadurch gekennzeichnet, dass** ein Dosierventil (33) des Dispensers (31) geschlossen ist, wenn der Materialdetektor (37) ein mineralisches Material (M1) ermittelt, und das Dosierventil (33) geöffnet ist, wenn der Materialdetektor (37) ein eisenhaltiges Material (M2) ermittelt.

6. Steuerungsverfahren nach einem der vorhergehenden Ansprüche **dadurch gekennzeichnet, dass** der Materialdetektor (37) Vibrationen des Bohrlochspülmoduls (2) oder Vibrationen einer Handwerkzeugmaschine (1), in welcher das meißelnde Werkzeug (5) eingesetzt ist, durch einen Vibrationssensor (39) erfasst und eine Auswertungseinheit (40) basierend auf den Vibrationen das Material (M2) ermittelt.

7. Steuerungsverfahren nach Anspruch 6, **dadurch gekennzeichnet, dass** eine Vibration oberhalb eines Schwellwerts einem eisenhaltigen Material (M2) und eine Vibration unterhalb des Schwellwerts einem hauptsächlich mineralischen Material (M1) zugeordnet wird.

8. Bohrlochspülmodul (2) für ein bohrmeißelndes Werkzeug (5) mit
einem Gebläse (30) zum Erzeugen eines ausblasenden Luftstroms (Q2),
**gekennzeichnet durch**
einen steuerbaren Dispenser (31) zum Ausgeben feinkörniger Partikel in den von dem Gebläse (30) erzeugten Luftstrom (Q2),
einen Materialdetektor (37) zum Ermitteln des von dem Werkzeug (5) bearbeiteten Materials (M), und
eine Steuerung (36), welche ansprechend auf das von dem Materialdetektor (37) ermittelte Material, den Dispenser (31) schließt, wenn der Materialdetektor (37) ein mineralisches Material (M1) ermittelt und den Dispenser (31) die feinkörnigen Partikel ausgebend schaltet, wenn der Materialdetektor (37) ein eisenhaltiges Material (M2) ermittelt.

9. Bohrlochspülmodul (2) nach Anspruch 8, **dadurch gekennzeichnet, dass** der Materialdetektor (37) einen Vibrationssensor (39) zum Erfassen von Vibrationen und eine Auswertungseinheit (40) zum Zuordnen von Vibrationen oberhalb eines Schwellwerts zu einem eisenhaltigen Material (M2) und von Vibrationen unterhalb des Schwellwerts zu einem mineralischen Material beinhaltet.

10. Bohrlochspülmodul (2) nach einem der Ansprüche 8 oder 9, **gekennzeichnet durch** einen Staubsammelbehälter (26) und einen Staubfilter (27) und einen Lüfter (28) zum Erzeugen eines ansaugenden Luftstroms (Q1), wobei das Gebläse (30) zwischen dem ausblasenden Luftstrom (Q2) und dem ansaugenden Luftstrom (Q1) schaltbar ist.

11. Handwerkzeugmaschine (1) mit einem Bohrlochspülmodul (55) nach einem der Ansprüche 8 bis 9, **gekennzeichnet durch** einen Elektromotor (9) und ein von dem Elektromotor (9) angetriebenes Schlagwerk (6).

## Claims

1. Control method for a borehole flushing module (2) for a drilling and chiselling tool (5), comprising the steps of:
providing fine particles in a dispenser (31),
determining a material (M) at a point which is worked by the tool (5) using a material detector (37);
introducing the fine particles at the point which is worked by the tool (5) when the material detector (37) determines an iron-containing material (M2) and
drawing in an air stream (Q1) from the point which is worked using the tool (5) by means of a fan (28) of the borehole flushing module (2) when the material detector (37) determines a mainly mineral material (M1).

2. Control method according to Claim 1, **characterized in that**, when the material detector (37) determines an iron-containing material (M2), the fine particles are introduced at the worked point by way of being admixed to an air stream (Q2) which is produced by a blower (30) of the borehole flushing module (2).

3. Control method according to either of the preceding claims, **characterized in that** fine particles are separated off from the air stream (Q1) and fed to the dispenser (31).

4. Control method according to Claim 3, **characterized in that** iron-containing particles are removed from the air stream (Q1).

5. Control method according to one of the preceding claims, **characterized in that** a metering valve (33) of the dispenser (31) is closed when the material detector (37) determines a mineral material (M1), and the metering valve (33) is opened when the material detector (37) determines an iron-containing material (M2).

6. Control method according to one of the preceding claims, **characterized in that** the material detector (37) detects vibrations of the borehole flushing module (2) or vibrations of a handheld power tool (1) in which the chiselling tool (5) is inserted using a vibration sensor (39) and an evaluation unit (40) determines the material (M2) on the basis of the vibrations.

7. Control method according to Claim 6, **characterized in that** a vibration above a threshold value is assigned to an iron-containing material (M2) and a vibration below the threshold value is assigned to a mainly mineral material (M1).

8. Borehole flushing module (2) for a drilling and chiselling tool (5) having
a blower (30) for producing a blowing-out air stream (Q2),
**characterized by**
a controllable dispenser (31) for dispensing fine particles into the air stream (Q2) which is produced by the blower (30),
a material detector (37) for determining the material (M) which is worked by the tool (5), and
a controller (36) which, in response to the material which is determined by the material detector (37), closes the dispenser (31) when the material detector (37) determines a mineral material (M1) and switches the dispenser (31) such that it dispenses the fine particles when the material detector (37) determines an iron-containing material (M2).

9. Borehole flushing module (2) according to Claim 8, **characterized in that** the material detector (37) contains a vibration sensor (39) for detecting vibrations and an evaluation unit (40) for assigning vibrations above a threshold value to an iron-containing material (M2) and vibrations below the threshold value to a mineral material.

10. Borehole flushing module (2) according to either of Claims 8 and 9, **characterized by** a dust-collection container (26) and a dust filter (27) and a fan (28) for producing a drawing-in air stream (Q1),
wherein the blower (30) can be switched between the blowing-out air stream (Q2) and the drawing-in air stream (Q1).

11. Handheld power tool (1) having a borehole flushing module (55) according to either of Claims 8 and 9, **characterized by** an electric motor (9) and a striking mechanism (6) which is driven by the electric motor (9).

## Revendications

1. Procédé de commande d'un module de balayage de trou de perçage (2) destiné à un outil de perçage (5), ledit procédé comprenant les étapes suivantes :
fournir des particules fines dans un distributeur (31),
détecter, à l'aide d'un détecteur de matériau (37), un matériau (M) à un emplacement traité par l'outil (5) ;
introduire les particules fines à l'emplacement traité par l'outil (5) lorsque le détecteur de matériau (37) détecte un matériau ferreux (M2) et
aspirer un flux d'air (Q1) depuis l'emplacement traité par l'outil (5) au moyen d'un ventilateur (28) du module de balayage de trou de perçage (2) lorsque le détecteur de matériau (37) détecte un matériau essentiellement minéral (M1).

2. Procédé de commande selon la revendication 1, **caractérisé en ce que**, lorsque le détecteur de matériau (37) détecte un matériau ferreux (M2), les particules fines sont introduites à l'emplacement traité dans un flux d'air (Q2) généré par une soufflante (30) du module de balayage de trou de perçage (2).

3. Procédé de commande selon l'une des revendications précédentes, **caractérisé en ce que** les particules fines sont séparées du flux d'air (Q1) et amenées au distributeur (31).

4. Procédé de commande selon la revendication 3, **caractérisé en ce que** les particules contenant du fer sont éliminées du flux d'air (Q1).

5. Procédé de commande selon l'une des revendications précédentes, **caractérisé en ce qu'**une soupape de dosage (33) du distributeur (31) est fermée lorsque le détecteur de matériau (37) détecte un matériau minéral (M1), et la soupape de dosage (33) est ouverte lorsque le détecteur de matériau (37) détecte un matériau ferreux (M2).

6. Procédé de commande selon l'une des revendications précédentes, **caractérisé en ce que** le détecteur de matériau (37) détecte les vibrations du module de balayage de trou de forage (2) ou les vibrations d'une machine-outil à main (1), dans laquelle l'outil de burinage (5) est utilisé, par le biais d'un capteur de vibrations (39) et une unité d'évaluation (40) détecte le matériau (M2) sur la base des vibrations.

7. Procédé de commande selon la revendication 6, **caractérisé en ce qu'**une vibration supérieure à une valeur seuil est associée à un matériau ferreux (M2) et une vibration inférieure à la valeur seuil est associée à un matériau essentiellement minéral (M1).

8. Module de balayage de trou de perçage (2) destiné à un outil de perçage (5) comprenant une soufflante (30) destinée à générer un flux d'air de soufflage (Q2), **caractérisé par**
un distributeur commandable (31) destiné à délivrer des particules fines dans le flux d'air (Q2) généré par la soufflante (30),
un détecteur de matériau (37) destiné à détecter le matériau (M) traité par l'outil (5), et une commande (36) qui, en réponse au matériau détecté par le détecteur de matériau (37), ferme le distributeur (31) lorsque le détecteur de matériau (37) détecte un matériau minéral (M1) et commute le distributeur (31) de manière à délivrer les particules fines lorsque le détecteur de matériau (37) détecte un matériau ferreux (M2).

9. Module de balayage de trou de perçage (2) selon la revendication 8, **caractérisé en ce que** le détecteur de matériau (37) comporte un capteur de vibrations (39) destiné à détecter les vibrations et une unité d'évaluation (40) destinée à associer des vibrations supérieures à une valeur seuil à un matériau ferreux (M2) et des vibrations inférieures à une valeur seuil à un matériau minéral.

10. Module de balayage de trou de perçage (2) selon l'une des revendications 8 ou 9, **caractérisé par** un récipient de récupération de poussières (26) et un filtre à poussières (27) et un ventilateur (28) destiné à générer un flux d'air d'aspiration (Q1), la soufflante (30) pouvant être commutée entre le flux d'air de soufflage (Q2) et le flux d'air d'aspiration (Q1).

11. Machine-outil à main (1) comprenant un module de balayage de trou de perçage (55) selon l'une des revendications 8 à 9, **caractérisée par** un moteur électrique (9) et un mécanisme de percussion (6) entraîné par le moteur électrique (9).
